(19) Europäisches Patentamt
European Patent Office
Office européen des brevets

(11) Veröffentlichungsnummer: **0 218 174**
**A2**

(12) # EUROPÄISCHE PATENTANMELDUNG

(21) Anmeldenummer: **86113412.0**

(22) Anmeldetag: **30.09.86**

(51) Int. Cl.⁴: **C 09 K 19/60**, C 09 B 69/00

(30) Priorität: **11.10.85 DE 3536267**

(43) Veröffentlichungstag der Anmeldung: **15.04.87 Patentblatt 87/16**

(84) Benannte Vertragsstaaten: **CH DE GB LI**

(71) Anmelder: **BAYER AG, Konzernverwaltung RP Patentabteilung, D-5090 Leverkusen 1 Bayerwerk (DE)**

(72) Erfinder: **Heidenreich, Holger, Dr., Andreas-Gryphius-Strasse 22, D-5000 Köln 80 (DE)**
Erfinder: **Claussen, Uwe, Dr., Carl-Rumpff-Strasse 29, D-5090 Leverkusen 1 (DE)**

(54) **Azofarbstoffe sowie flüssigkristallines Material enthaltend Azofarbstoffe.**

(57) Flüssigkristallines Material enthaltend mindestens einen Farbstoff der Formel

$$A\text{-}X\text{-}(\overset{\overset{R'}{|}}{\underset{\underset{R''}{|}}{C}})_n\text{-}O\text{-}Y \qquad I,$$

in der
A = Rest eines Azofarbstoffs, X = O, NH,

R', R'' = H, $C_1$-$C_4$-Alkyl, wobei die Reste $-\overset{\overset{R'}{|}}{\underset{\underset{R''}{|}}{C}}-$ gleich oder verschieden sein können, vorzugsweise jedoch $-CH_2$-Reste sind, Y = gegebenenfalls substituiertes Phenyl, gegebenenfalls substituiertes Naphthyl, n = 2, 3, 4 sowie neue, unter die Formel I fallende Azofarbstoffe.

EP 0 218 174 A2

0218174

BAYER AKTIENGESELLSCHAFT 5090 Leverkusen, Bayerwerk
Konzernverwaltung RP
Patentabteilung PG/m-c

# Azofarbstoffe sowie flüssigkristallines Material enthaltend Azofarbstoffe

Die Erfindung betrifft flüssigkristallines Material enthaltend Azofarbstoffe sowie neue Azofarbstoffe. Das flüssigkristalline Material findet Verwendung in Displays.

Unter Displays werden hier opto-elektronische Anzeigeelemente verstanden, die in der Regel aus zwei parallelen, im Abstande von 5 bis 50 µm angeordneten Platten bestehen, von denen wenigstens eine aus lichtdurchlässigem Material hergestellt ist. An den Innenseiten der Platten werden Elektroden angebracht, der Raum zwischen ihnen ist mit dem farbstoffhaltigen, flüssigkristallinen Material gefüllt. Der Aufbau und die Herstellung der optoelektronischen Anzeige ist bekannt (Kelker, Hatz, Handbook of Liquid Crystals S. 611 ff; 1980).

Ebenfalls ist bekannt, daß man in das flüssigkristalline Material ausgesuchte Farbstoffe einbetten kann, die den vom äußeren angelegten Feld bewirkten Richtungs- und

Ordnungsänderungen des flüssigkristallinen Materials folgen (sog. guest-host-Wechselwirkung). Diese besondere Eigenschaft macht geeignete Farbstoffe selten, wenn man neben den genannten dichroitischen Eigenschaften zusätzlich Echtheiten verlangt, die eine technische Nutzung des Effekts ermöglichen. Wichtige Voraussetzungen hierfür sind die Lichtechtheit, eine ausreichende Löslichkeit und die Verträglichkeit mit anderen Farbstoffen.

In der Literatur sind zahlreiche geeignete Einzelfarbstoffe beschrieben. So sind auch häufig Azofarbstoffe genannt worden (R.J. Cox: Mol. Crystals Liquid Crystals, 1979, S. 1-32).

Diese Azofarbstoffe weisen im allgemeinen einen hohen Ordnungsgrad auf. Jedoch sind die Farbstärken selten ausreichend, und die Lichtechtheit ist häufig niedrig. Als Folge dieser Erkenntnis hat sich der Schwerpunkt der Entwicklung brauchbarer Farbstoffe auf die Stoffklasse der Anthrachinone verlagert (siehe z.B. DE-OS 3 028 593, DE-OS 3 009 974, DE-OS 3 006 744).

Überraschenderweise wurde nun gefunden, daß sich Azofarbstoffe der Formel

$$A - X - (\overset{R'}{\underset{R''}{C}})_n - O - Y \qquad I,$$

in der

A = Rest eines Azofarbstoffs,

X = O, NH,

Y = gegebenenfalls substituiertes Phenyl, gegebenenfalls substituiertes Naphthyl,

n = 2, 3, 4

R', R'' = H, $C_1$-$C_4$-Alkyl, wobei die Reste $-\overset{R'}{\underset{R''}{C}}-$ gleich oder verschieden sein können, vorzugsweise jedoch $-CH_2-$Reste sind,

ausgezeichnet zur Verwendung in flüssigkristallinem Material eignen. Sie sind dort lichtecht, farbstark und haben gute Ordnungsgrade.

Die Erfindung betrifft demnach flüssigkristalline Materialien enthaltend mindestens einen Farbstoff der Formel I.

Als Substituenten für Phenyl und Naphthyl (Y) seien beispielhaft genannt:

Halogen wie Cl, Br, F, -CN, $-CF_3$, $-OCF_3$, -R, -OR, $-O-\underset{\underset{O}{\|}}{C}-R$,

$-\underset{\underset{O}{\|}}{C}R$, $-\underset{\underset{O}{\|}}{C}-OR$, $-O-\underset{\underset{O}{\|}}{C}-OR$, $-X'-(CH_2)_n$, -OR, -SR, $-\underset{\underset{O}{\|}}{C}-X'-(CH_2)_n$, -OR,

$-O-\underset{\underset{O}{\|}}{C}-X'-(CH_2)_n$, -OR, wobei

R = gegebenenfalls substituiertes Alkyl, insbesondere $C_1$-$C_{10}$-Alkyl und $C_1$-$C_4$-Alkyl, gegebenenfalls substituiertes Cycloalkyl, insbesondere $C_3$-$C_7$-Cycloalkyl und Cyclopentyl, Cyclohexyl, gegebenenfalls substituiertes Aryl, insbesondere Phenyl und Naphthyl, gegebenenfalls substituiertes Aralkyl, insbesondere Phenyl- und Naphthyl-$C_1$-$C_4$-alkyl, z.B. Benzyl und Phenethyl.

X' = O, NH,

n' = 2, 3, 4.

Besonders bevorzugte Substituenten sind:
$-CH_3$, $-C_2H_5$, $-C_3H_7$, $t-C_4H_9$, $n-C_4H_9$, $-C_5H_{11}$, Cl, Br, Cyclohexyl, Phenyl, Naphthyl, $-OCH_3$, $-OC_2H_5$, $-\underset{\underset{O}{\|}}{C}-CH_3$, $-\underset{\underset{O}{\|}}{C}-C_2H_5$, $-\underset{\underset{O}{\|}}{C}-O-(C_1-C_4\text{-Alkyl})$, $-\underset{\underset{O}{\|}}{C}-O-(CH_2)_{n'}-O-(C_1-C_4\text{-Alkyl})$, $-\underset{\underset{O}{\|}}{C}-O-(CH_2)_{n'}$ -O-Aryl, wobei Aryl Phenyl oder Naphthyl bezeichnet, Phenoxy, $-\underset{\underset{O}{\|}}{C}-O-CH_2CH_2-OCH_3$, $-\underset{\underset{O}{\|}}{C}-OCH_3$,

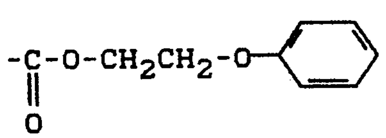.

Bevorzugt sind die Phenyl- und Naphthylreste Y unsubstituiert oder tragen einen Substituenten.

Weiterhin betrifft die Erfindung neue Azofarbstoffe.

Bevorzugt enthält das flüssigkristalline Material mindestens einen Farbstoff der folgenden Formeln, wobei wiederkehrende Bezeichnungen die bereits angegebenen Bedeutungen und Vorzugsbedeutungen haben:

$$B'\text{-}L\text{-}N{=}N\text{-}M\text{-}(N{=}N\text{-}M')_m\text{-}X\text{-}(\overset{\displaystyle R'}{\underset{\displaystyle R''}{C}})_n\text{-}O\text{-}Y \qquad \text{II}$$

B' = H, -CN, $-CF_3$, $-OCF_3$, Halogen wie Cl, Br, F, -R, -OR, $-\underset{\displaystyle \| \atop O}{C}-OR$, -SR, $-X'-(CH_2)_n$, -OR, $-\underset{\displaystyle \| \atop O}{C}-R$, $-\underset{\displaystyle \| \atop O}{C}-X'-(CH_2)_n$, -OR, $-O-\underset{\displaystyle \| \atop O}{C}-X'-(CH_2)_n$, -OR, D-N=N-;

D = Rest einer Diazokomponente der Benzol- oder Naphthalinreihe;

L,M'=gegebenenfalls substituiertes 1,4-Phenylen, gegebefalls substituiertes 1,4-Naphthylen;

M = gegebenenfalls substituiertes 4,4'-Biphenylylen, gegebenenfalls substituiertes 1,4-Phenylen, gegebenenfalls substituiertes 1,4-Naphthylen;

m = 0, 1; für den Fall, daß M = gegebenenfalls substituiertes Biphenylylen, bezeichnet m nur 1.

Weitere Vorzugsbedeutungen für B' sind:

$-\underset{\underset{O}{\|}}{C}-O-(C_1-C_5\text{-Alkyl})$, $-\underset{\underset{O}{\|}}{C}-O-(CH_2)_{n'}-O-(C_1-C_4\text{-Alkyl})$,

$-\underset{\underset{O}{\|}}{C}-O-(CH_2)_{n'}-O\text{-Aryl}$, $C_1-C_4$-Alkoxy, $-O-(CH_2)_{n'}$ $-O(C_1-C_4\text{-Alkyl})$,

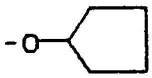, $-O-(CH_2)_{n'}-O$-Aryl,

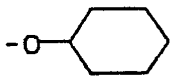, $C_1-C_5$-Alkylthio, wobei

Aryl Phenyl oder Naphthyl bezeichnet,

$-OCH_3$, $-OC_2H_5$, $-OC_2H_4-OCH_3$, $-O-C_2H_4-$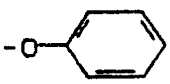,

$-CN$, $-COOCH_3$, $-COOC_2H_5$, $-COOC_2H_4-OCH_3$, $-COOC_2H_4-$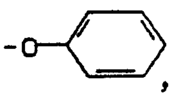,

$-CH_3$, $-t-C_4H_9$, $-COOCH_3$.

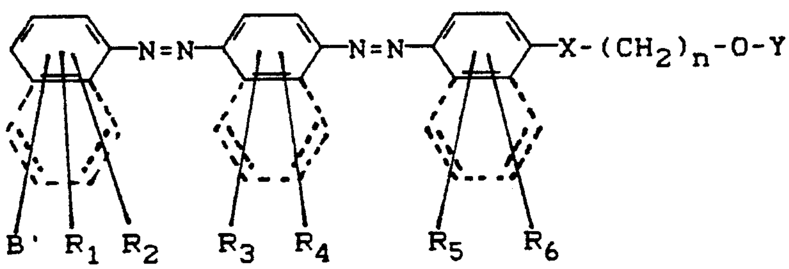 III

$R_1, R_2, R_3, R_4, R_5, R_6$ = Halogen wie Cl, Br, F, -CN, -R,

-OR, -SR, $-\underset{\underset{O}{\|}}{C}-R$, $-\underset{\underset{O}{\|}}{C}-OR$, $-X'-(CH_2)_{n'}-OR$,

$-\underset{\underset{O}{\|}}{C}-X'-(CH_2)_{n'}-OR$, $-CF_3$

Weitere Vorzugsbedeutungen für $R_1$, $R_2$, $R_3$, $R_4$, $R_5$, $R_6$ sind:

$-CH_3$, $-C_2H_5$, $-OCH_3$, $-OC_2H_5$, $-\underset{\underset{O}{\|}}{C}-CH_3$, $-\underset{\underset{O}{\|}}{C}-O-(C_1-C_4\text{-Alkyl})$,

$-S-CH_3$, $-S-C_2H_5$, $-\underset{\underset{O}{\|}}{C}-OCH_3$, $-\underset{\underset{O}{\|}}{C}-O-CH_2CH_2-O-CH_3$,

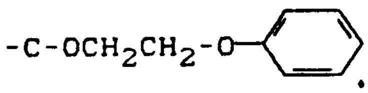.

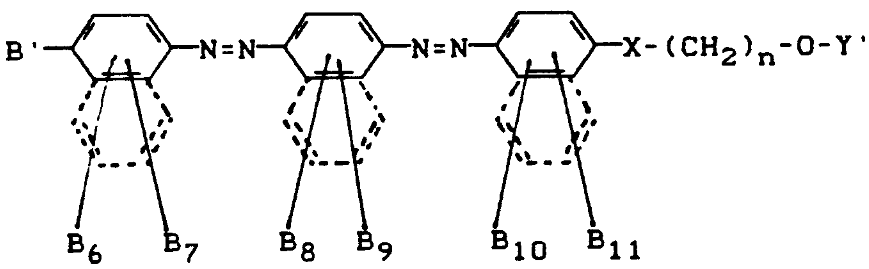 IV

$B_6, B_7, B_8, B_9, B_{10}, B_{11}$ = H, $-CN$, $-CF_3$, Cl, Br, $-CH_3$, $-C_2H_5$, $-OCH_3$, $-OC_2H_5$, $-\underset{\underset{O}{\|}}{C}CH_3$, $-\underset{\underset{O}{\|}}{C}-O-(C_1-C_4\text{-Alkyl})$,

$-SCH_3$, $-SC_2H_5$, $-\underset{\underset{O}{\|}}{C}-O-CH_2CH_2-OCH_3$,

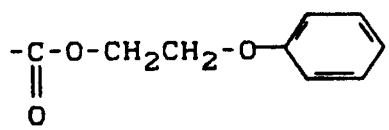

Y' = Naphthyl und insbesondere Phenyl, die durch $C_1$-$C_4$-Alkyl, Cl, Br, Cyclohexyl, Cyclopentyl, $C_1$-$C_4$-Alkoxy, Phenyl, Naphthyl, Phenoxy, $-\underset{\underset{O}{\|}}{C}-O-(C_1-C_4\text{-Alkyl})$,

$-\underset{\underset{O}{\|}}{C}-O-(CH_2)_n,-O-(C_1-C_4\text{-Alkyl})$, $-\underset{\underset{O}{\|}}{C}-O-(CH_2)_n$, 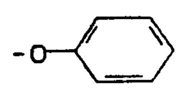,

$\underset{\underset{O}{\|}}{C}-(C_1-C_4\text{-Alkyl})$ substituiert sein können.

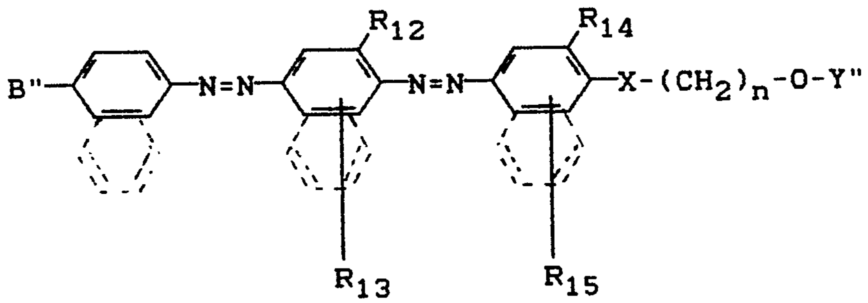 V

B" = B' und insbesondere $-OCH_3$, $-OC_2H_5$, $-O-CH_2CH_2-OCH_3$,

$-O-CH_2CH_2-O$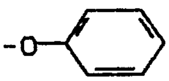, $-CN$, $-COOCH_3$, $-COOC_2H_5$,

$-\underset{\underset{O}{\|}}{C}-O-CH_2CH_2-OCH_3$, $-\underset{\underset{O}{\|}}{C}-O-CH_2CH_2-O$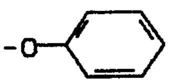, $-CH_3$,

$-C_2H_5$, $-t-C_4H_9$, $CF_3$;

$R_{12}, R_{13}, R_{14}, R_{15}$ = H, $-CH_3$, $-C_2H_5$, Cl, Br, $-OCH_3$, $-OC_2H_5$, $-\underset{\underset{O}{\|}}{C}-OCH_3$, $-\underset{\underset{O}{\|}}{C}-OCH_2CH_2-OCH_3$,

$-\underset{\underset{O}{\|}}{C}-OCH_2CH_2$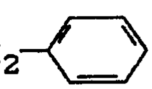, $-\underset{\underset{O}{\|}}{C}CH_3$, $-CN$;

Y" = Naphthyl und insbesondere Phenyl, die durch $-CH_3$, $-C_2H_5$, $-t-C_4H_9$, Cl, Br, Cyclohexyl, Cyclopentyl, $-OCH_3$, $-OC_2H_5$, Phenyl, Phenoxy, $-\underset{\underset{O}{\|}}{C}-OCH_3$, $-\underset{\underset{O}{\|}}{C}-OC_2H_5$,

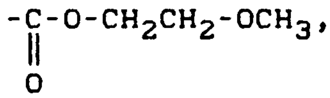, 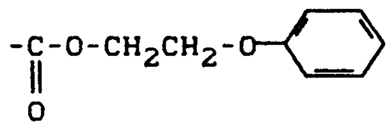, 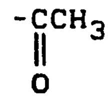

substituiert sein können.

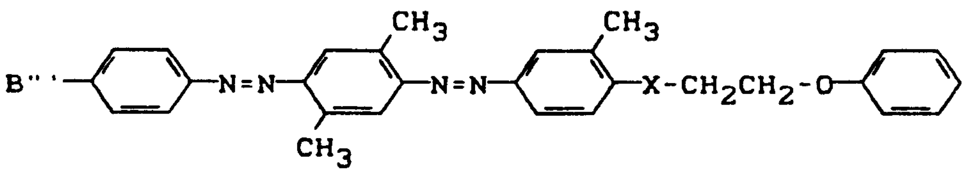 VI

B''' = $-OCH_3$, $-OC_2H_5$, 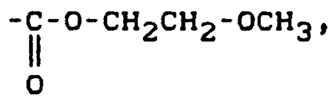,

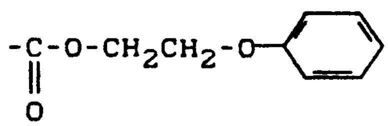, $-O-CH_2CH_2-OCH_3$, $-CN$.

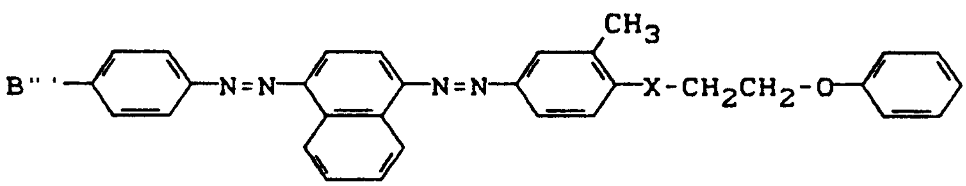 VII

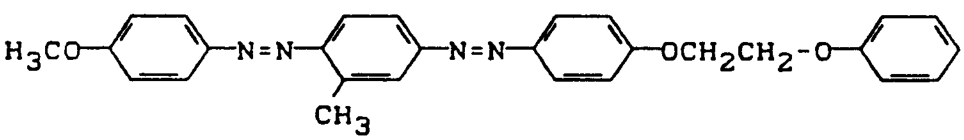 VIII

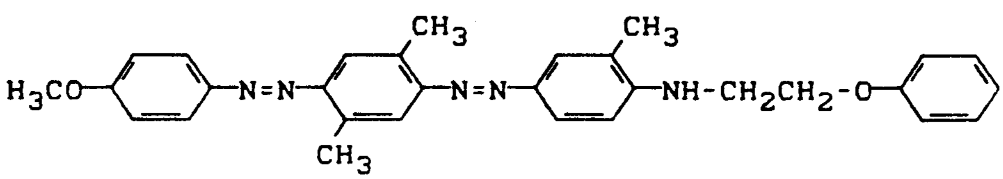 IX

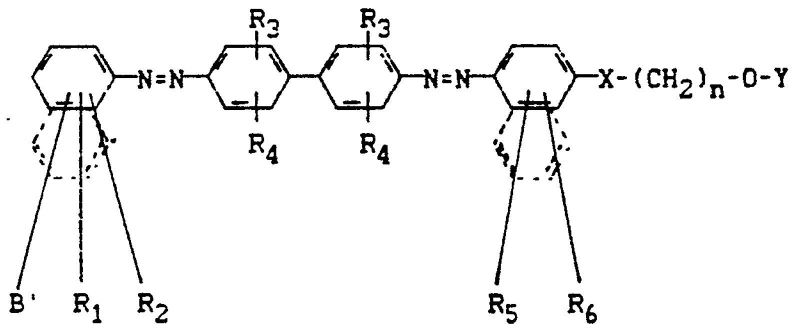 X

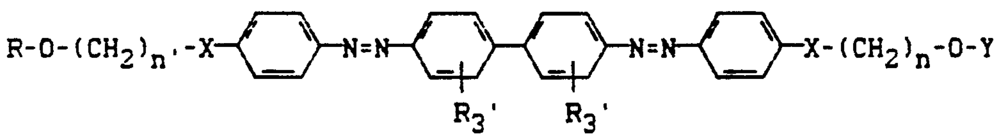 XI

$R_3$'= Halogen wie Cl, Br, $C_1$-$C_4$-Alkoxy, insbesondere Methoxy, $C_1$-$C_4$-Alkyl, insbesondere Methyl.

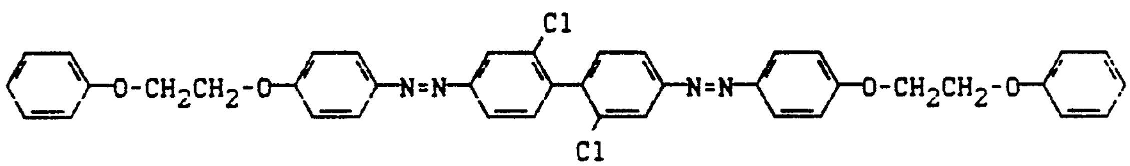

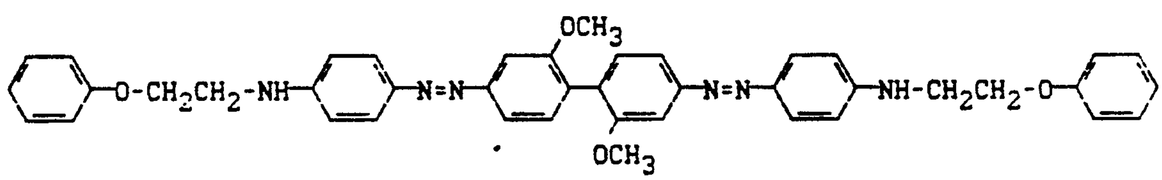

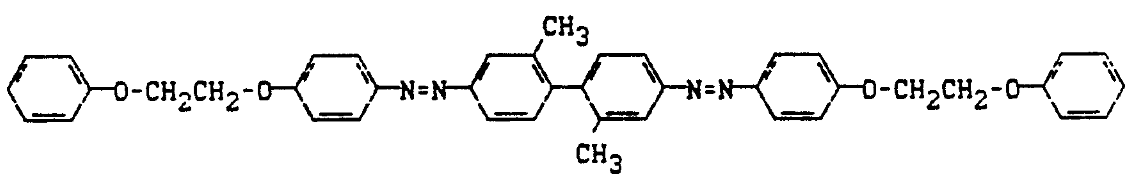

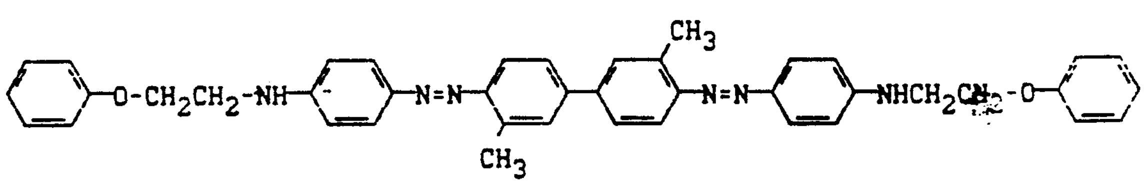

Die Erfindung betrifft weiterhin neue Farbstoffe der Formeln XII - XV.

$$B_1-L-N{=}N-M-(N{=}N-M')_m-X-(\overset{R'}{\underset{R''}{C}})_n-O-Y \qquad XII$$

$$B_1 = -\underset{\underset{O}{\|}}{C}-OR.$$

$$RO-(CH_2)_{n'}-X'-L-N{=}N-M-(N-N-M')_m-NH-(\overset{R'}{\underset{R''}{C}})_n-O-Y \qquad XIII$$

$$RO-(CH_2)_{n'}-X'-\underset{\underset{O}{\|}}{C}-L-N{=}N-M-(N{=}N-M')_m-NH-(\overset{R'}{\underset{R''}{C}})_n-O-Y \qquad XIV$$

$$RO-(CH_2)_{n'}-X'-\underset{\underset{O}{\|}}{C}-O-L-N{=}N-M-(N{=}N-M')_m-NH-(\overset{R'}{\underset{R''}{C}})_n-O-Y \qquad XV$$

In den Formeln XII - XV haben $B_1$, L, R, R', R", M, M', m, X, Y, n', X' und n die oben angegebenen Bedeutungen und Vorzugsbedeutungen.

Die Herstellung der in die flüssigkristallinen Materialien eingesetzten Farbstoffe sowie der neuen Farbstoffe erfolgt in üblicher Weise durch Diazotierung und Kupplung, vorzugsweise nach literaturbekannten Verfahren oder in Analogie zu literaturbekannten Verfahren (s. z.B. DE-OS 2 837 500, DE-OS 2 948 456).

Nötigenfalls können die bei der Synthese anfallenden Farbstoffe vor dem Einsatz in die flüssigkristallinen Materialien, z.B. durch chromatographische Verfahren wie Verteilungschromatographie und insbesondere Säulenchromatographie, z.B. über Kieselgel mit Toluol-Essigester- oder Chloroform-Methanol-Gemischen als Laufmittel, gereinigt werden. Die Reinheitskontrolle erfolgt dünnschichtchromatographisch.

Die erfindungsgemäßen Farbstoffe lassen sich in flüssigkristallinen Materialien dispers verteilt verwenden. Bevorzugt ist der Einsatz in Mischungen flüssigkristalliner Komponenten besonders solcher mit positiver dielektrischer Anisotropie. Die Zahl der Mischungsvarianten ist groß. Beispielsweise seien Mischungen von 4(4-Cyanophenyl)-alkylcyclohexanen genannt, wobei Alkyl Propyl- (25 %), n-Pentyl- (38 %) und n-Heptyl-(25 %) bedeutet und als zusätzliche Komponente 4(4'-Cyanobiphenyl)-pentylcyclohexan (12 %) verwendet wird, oder Mischungen von 4(4'-Cyanobiphenyl)-alkyl- und -alkoxy-Verbindungen, beispielsweise mit der Bedeutung n-Pentyl- (53 %), n-Heptyl- (25 %) für Alkyl und Octyloxy-(14 %) für Alkoxy und 4(4'-Cyano-terphenyl)-alkylverbindungen, z.B. n-Pentyl- (8 %) für Alkyl. Gleichfalls geeignet sind Mischungen, die 4-Cyanophenyl-pyrimidine enthalten. Das flüssigkristalline Material enthält die Farbstoffe gemäß Formel I vorzugsweise zu etwa 0,01 bis etwa 30 Gew.-%, besonders bevorzugt zu etwa 0,5 bis etwa 5 Gew.-%.

Die in den flüssigkristallinen Materialien dispers verteilten Farbstoffe und ihre Mischungen mit anderen Farbstoffen, insbesondere mit Anthrachinonfarbstoffen, lassen sich in opto-elektronischen Anzeigen verwenden.

Beispiel 1

13,4 g technischer p-Amino-benzoesäuremethylester wird in einer Mischung aus 50 ml DMF, 50 ml Essigsäure, 20 ml Propionsäure und 40 ml 85 %iger Phosphorsäure bei $0^{o}$ C mit 27,8 ml 40 %iger Nitrosylschwefelsäure diazotiert. Nach 1 Stunde gibt man auf 200 g Eis und nimmt den Nitritüberschuß mit Amidosulfonsäure weg. Anschließend fügt man zu der Diazolösung eine Mischung aus 10,5 g 2,5-Dimethylanilin in 100 ml Essigsäure. Man stumpft mit Natriumacetatlösung auf pH 3,5 ab und läßt über Nacht auskuppeln. Es werden 23,3 g des folgenden Farbstoffs isoliert.

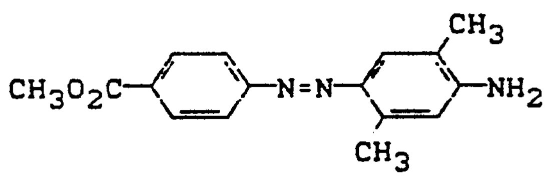

Zur Weiterdiazotierung versetzt man eine Lösung von 4,1 g des obigen Farbstoffs in 50 ml DMF, 30 ml Essigsäure und 20 ml 85 %iger Phosphorsäure bei Raumtemperatur mit 4,7 ml 40 %iger Nitrosylschwefelsäure. Nach 3 Stunden gibt man auf 100 g Eis und zerstört den Nitritüberschuß. Zu der erhaltenen Diazolösung läßt man anschließend eine Mischung aus N-Phenoxy-ethyl-o-methyl-anilin in 50 ml DMF tropfen. Zum Auskuppeln stumpft man langsam mit Soda auf pH 3 ab. Am anderen Tag isoliert man 7,0 g Rohfarbstoff.

Durch Chromatographie an Kieselgel mit Chloroform/Methanol 30:1 als Laufmittel werden 5,8 g des reinen Farbstoffs folgender Formel erhalten:

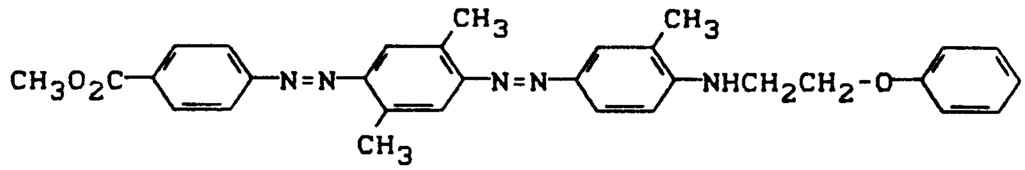

Er hat einen Ordnungsgrad S von 0,71 und einen Absorptionsmaximum bei 479 nm.

Zur Bestimmung des Ordnungsgrads S wird der Farbstoff in einer nematischen Phase (TLI 1132 Fa. Merck), die ein Gemisch von substituierten Phenylcyclohexanen darstellt, gelöst und der Dichroismus gemessen. Hierzu wird die Lösung in eine Zelle gefüllt, deren Wände mit einer Orientierungsschicht versehen sind und die planparallel im Abstand von 20 µ liegen. Die Absorption wird mit polarisiertem Licht gemessen, wobei das Polarisationsfilter so eingestellt wird, daß maximale Absorption erfolgt ($A\|$) zu diesem Meßwert nun die minimale Absorption durch Drehen des Filters um $90^0$ erzeugt ($A\perp$). Der Ordnungsgrad wird nach der bekannten Beziehung

$$S = \frac{\frac{A\|}{A\perp} - 1}{\frac{A\|}{A\perp} + 2}$$

berechnet.

Beispiel 2

3,56 g p-Methoxyanilin werden in 25 ml Salzsäure warm gelöst. Nach Zugabe von 50 g Eis diazotiert man bei 0°C mit 2,1 g Natriumnitrit in 10 ml Wasser. Man läßt 1 Stunde nachrühren und entfernt den Nitritüberschuß. Zu der Diazolösung läßt man anschließend eine Mischung aus 3,1 g m-Toluidin und 10 ml Essigsäure tropfen. Man stumpft mit Natrimacetatlösung langsam auf pH 4 ab und isoliert am anderen Tag 6,1 g Rohfarbstoff der folgenden Formel

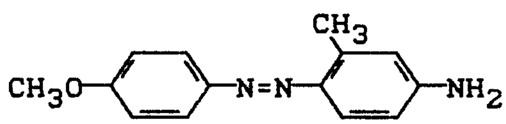

3,49 g des obigen Farbstoffs werden in einer Mischung aus 50 ml DMF, 30 ml Essigsäure und 20 ml 85 %iger Phosphorsäure bei Raumtemperatur mit 4,7 ml 40 %iger Nitrosylschwefelsäure diazotiert. Nach 3 Stunden gibt man auf Eis und entfernt den Nitritüberschuß mit Amidosulfonsäure. Hierzu gibt man dann eine Lösung von 1,4 g Phenol in 10 ml DMF. Zur Vervollständigung der Kupplung trägt man dann die Suspension auf eine Mischung aus 200 g Eis und 150 ml Natronlauge aus. Nach Ansäuern auf pH 5 werden am anderen Tag 4,5 g des Rohfarbstoffs der folgenden Formel durch Absaugen isoliert.

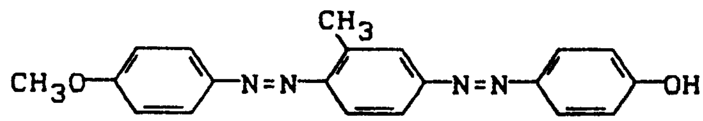

3,46 g des obigen Disazofarbstoffs werden in 50 ml Butanon-2 zusammen mit 2,2 g β-Brom-phenoxy-ethan und 2,5 g Pottasche zum Rückfluß erhitzt. Das Ende der Veretherung wird durch Dünnschichtchromatographie angezeigt. Die Isolierung des Rohfarbstoffs erfolgt durch Austragen auf Wasser und Absaugen. Nach Chromatographie an Kieselgel mit Chloroform/2 % Methanol als Laufmittel erhält man 4,1 g des reinen Farbstoffs der folgenden Formel.

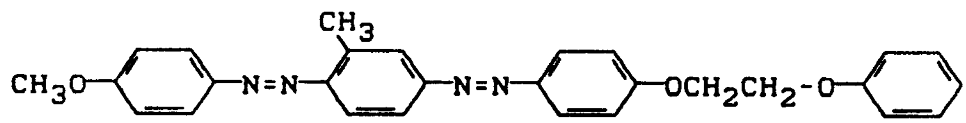

Er hat einen Ordnungsgrad S von 0,71 und ein Absorptionsmaximum bei 400 nm.

Nach dem in Beispiel 1 und 2 gezeigten Prinzip können auch die folgenden Farbstoffe hergestellt werden:

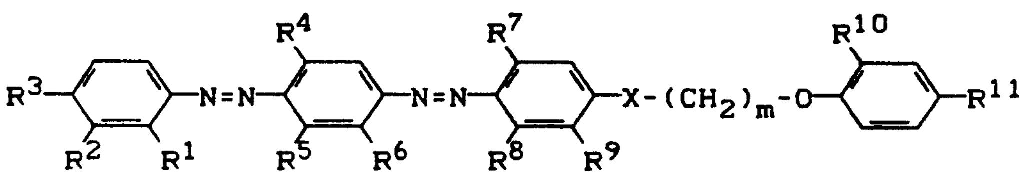

| Bsp. | $R^1$ | $R^2$ | $R^3$ | $R^4$ | $R^5$ | $R^6$ | $R^7$ | $R^8$ | $R^9$ | $R^{10}$ | $R^{11}$ | X | n | S | λmax |
|---|---|---|---|---|---|---|---|---|---|---|---|---|---|---|---|
| 3 | H | H | Cl | H | H | H | H | H | H | H | H | O | 2 | | |
| 4 | 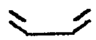 | | H | H | H | $CH_3$ | $CH_3$ | H | H | H | $CH_3$ | O | 2 | | |
| 5 | $CH_3$ | H | $OCH_3$ | H | 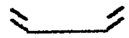 | | H | H | $CH_3$ | H | H | NH | 2 | | |
| 6 | H | H | $OCH_3$ | H | 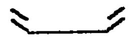 | | H | H | $CH_3$ | H | H | O | 2 | | 460 |
| 7 | H | H | $OCH_3$ | H | 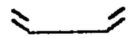 | | H | H | H | H | H | O | 2 | 0,75 | 444 |
| 8 | H | H | $OCH_3$ | $CH_3$ | H | $CH_3$ | H | H | H | H | H | O | 2 | | 402 |
| 9 | H | H | $OCH_3$ | H | 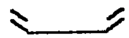 | | H | $CH_3$ | H | H | H | O | 2 | | 450 |
| 10 | H | H | $OCH_3$ | H | 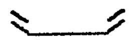 | | H | H | $CH_3$ | H | H | O | 2 | | 506 |
| 11 | H | H | $OCH_3$ | H | 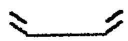 | | H | H | H | H | H | NH | 2 | 0,70 | 506 |
| 12 | H | H | $OCH_3$ | $CH_3$ | H | $CH_3$ | H | H | $CH_3$ | H | H | NH | 2 | 0,70 | 456 |
| 13 | H | H | $OCH_3$ | $CH_3$ | H | $CH_3$ | $CH_3$ | H | $CH_3$ | H | H | NH | 2 | | 465 |
| 14 | H | H | $OCH_3$ | $CH_3$ | H | $CH_3$ | H | H | H | H | H | NH | 2 | 0,70 | 451 |
| 15 | H | H | $CO_2CH_3$ | H | 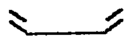 | | H | H | $CH_3$ | H | H | NH | 2 | 0,72 | 517 |
| 16 | H | H | $OCH_3$ | $CH_3$ | H | H | H | H | $CH_3$ | H | H | NH | 2 | 0,71 | 457 |
| 17 | H | H | $OCH_3$ | $CH_3$ | H | Cl | H | H | $CH_3$ | H | H | NH | 2 | | |
| 18 | H | H | $OCH_3$ | $CH_3$ | H | Cl | H | H | H | H | H | O | 2 | | |
| 19 | H | H | $OC_2H_4$-$OCH_3$ | $CH_3$ | H | H | H | 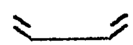 | | $CH_3$ | $CH_3$ | O | 3 | | |
| 20 | $CH_3$ | H | $OCH_3$ | $OCH_3$ | H | H | Cl | H | H | H | $C_2H_5$ | O | 4 | | |
| 21 | H | H | $CO_2C_2H_4O$- 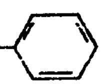 | H | H | H | H | H | H | Cl | n-$C_4H_9$ | O | 2 | | |

| Bsp. | $R^1$ | $R^2$ | $R^3$ | $R^4$ | $R^5$ | $R^6$ | $R^7$ | $R^8$ | $R^9$ | $R^{10}$ | $R^{11}$ | X | n | S |
|---|---|---|---|---|---|---|---|---|---|---|---|---|---|---|
| 22 | H | H | CN | H | H | CN | H | H | H | H | H | O | 2 | |
| 23 | H | H | $O-n-C_4H_9$ | $CH_3$ | $CH_3$ | H | H | H | $OCH_3$ | H | $OCH_3$ | NH | 4 | |
| 24 | H | Cl | Cl | Cl | H | H | Cl | H | H | H | $CO_2CH_3$ | O | 2 | |
| 25 | H | H | $CF_3$ | $CF_3$ | H | H | $CH_3$ | H | $CH_3$ | H | $CO_2C_4H_8O$- 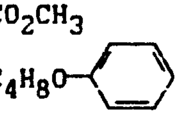 | O | 2 | |
| 26 | H | H | 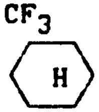 | $COCH_3$ | H | H | $CH_3$ | H | $CH_3$ | Cl | $O-n-C_4H_9$ | O | 2 | |
| 27 | H | H | O- 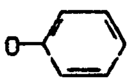 | H | H | $CO_2CH_3$ | H | 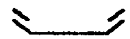 | | H | $-CO-C_4H_9$ | NH | 3 | |
| 28 | H | H | $CH_3O$- 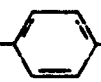 -N=N | H | $CH_3$ | H | H | H | H | H | H | O | 2 | |
| 29 | 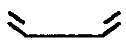 | | H | H | H | $CF_3$ | H | H | CN | H | H | NH | 2 | |
| 30 | H | H | $CH_3S$ | $OCH_3$ | H | $OCH_3$ | H | $OCH_3$ | H | Br | $OC_2H_5$ | NH | 3 | |
| 31 | H | H | $CO_2C_2H_4-O$- 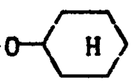 | Br | H | H | $OCH_3$ | H | $OCH_3$ | H | 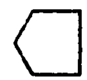 | NH | 2 | |
| 32 | $CH_3$ | H | $CH_3$ | H | H | $COCH_3$ | H | 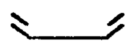 | | H | CN | O | 4 | |
| 33 | H | H | $OCOOCH_3$ | H | H | $CH_3$ | $CH_3$ | H | $CH_3$ | H | Br | O | 2 | |
| 34 | H | H | $OCOCH_3$ | H | H | H | H | H | $CH_3$ | H | $OCOOC_2H_5$ | O | 2 | |

Patentansprüche:

1. Flüssigkristallines Material enthaltend mindestens einen Farbstoff der Formel

$$A - X - (\overset{R'}{\underset{R''}{C}})_n - O - Y \qquad I,$$

in der

A = Rest eines Azofarbstoffs,

X = O, NH,

Y = gegebenenfalls substituiertes Phenyl, gegebenenfalls substituiertes Naphthyl,

n = 2, 3, 4.

R', R'' = H, $C_1$-$C_4$-Alkyl, wobei die Reste $-\overset{R'}{\underset{R''}{C}}-$ gleich oder verschieden sein können, vorzugsweise jedoch $-CH_2-$ Reste sind.

2. Flüssigkristallines Material gemäß Anspruch 1, enthaltend mindestens einen Farbstoff der Formel

$$B'-L-N=N-M-(N=N-M')_m-X-(\overset{R'}{\underset{R''}{C}})_n-O-Y \qquad II$$

in der

B'= H, -CN, $-CF_3$, $-OCF_3$, Halogen wie Cl, Br,

F, -R, -OR, -C-OR, -SR, -X'-$(CH_2)_{n'}$-OR, -C-R,
‖ ‖
O O

-C-X'-$(CH_2)_{n'}$-OR, -O-C-X'-$(CH_2)_{n'}$-OR, D-N=N-;
‖ ‖
O O

D = Rest einer Diazokomponete der Benzol- oder Naphthalinreihe;

L,M' = gegebenenfalls substituiertes 1,4-Phenylen, gegebenenfalls substituiertes 1,4-Naphthylen;

M = gegebenenfalls substituiertes 4,4'-Biphenylylen, gegebenenfalls substituiertes 1,4-Phenylen, gegebenenfalls substituiertes 1,4-Naphthylen;

m = 0, 1; für den Fall, daß M = gegebenenfalls substituiertes Biphenylylen bezeichnet m nur 1.

3. Flüssigkristallines Material gemäß Anspruch 1, enthaltend mindestens einen Farbstoff der Formel

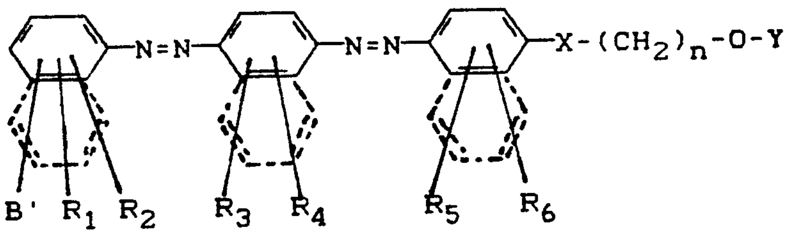

III

in der

$R_1, R_2, R_3, R_4, R_5, R_6$ = Halogen wie Cl, Br, F, -CN, -R, -OR, -SR, $-\underset{\underset{O}{\|}}{C}-R$, $-\underset{\underset{O}{\|}}{C}-OR$,

$-X'-(CH_2)_{n'}-OR$, $-\underset{\underset{O}{\|}}{C}-X'-(CH_2)_{n'}-OR$,

$-CF_3$.

4. Flüssigkristallines Material gemäß Anspruch 1, enthaltend mindestens einen Farbstoff der Formel

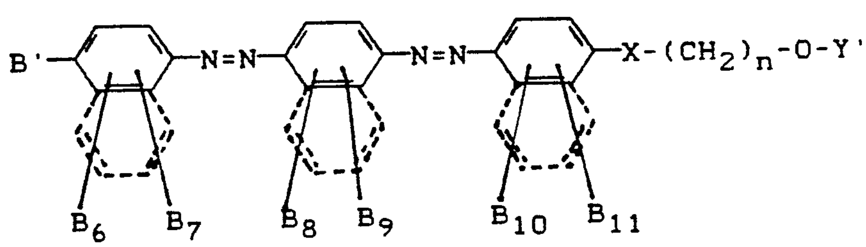

IV

in der

$B_6, B_7, B_8, B_9, B_{10}, B_{11}$ = H, -CN, $-CF_3$, Cl, Br, $-CH_3$, - $-C_2H_5$, $-OCH_3$, $-OC_2H_5$, $-\underset{\underset{O}{\|}}{C}CH_3$,

$-\underset{\underset{O}{\|}}{C}-O-(C_1-C_4\text{-Alkyl})$, $-SCH_3$,

$SC_2H_5$, $-\underset{\underset{O}{\|}}{C}-O-CH_2CH_2-OCH_3$

$-\underset{\underset{O}{\|}}{C}-O-CH_2CH_2-O$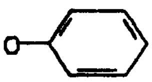,

Y' = Naphthyl und insbesondere Phenyl, die durch $C_1-C_4$-Alkyl, Cl, Br, Cyclohexyl, Cyclopentyl, $C_1-C_4$-Alkoxy, Phenyl, Naphthyl, Phenoxy, $-\underset{\underset{O}{\|}}{C}-O-(C_1-C_4\text{-Alkyl})$, $-\underset{\underset{O}{\|}}{C}-O-(CH_2)_n$,

$-O-(C_1-C_4\text{-Alkyl})$, $-\underset{\underset{O}{\|}}{C}-O-(CH_2)_n$, -O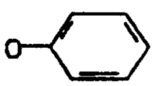,

$-\underset{\underset{O}{\|}}{C}-(C_1-C_4\text{-Alkyl})$ substituiert sein können.

5. Flüssigkristallines Material gemäß Anspruch 1, enthaltend mindestens einen Farbstoff der Formel

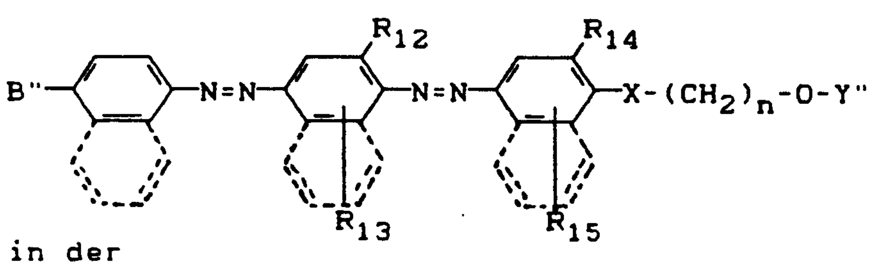 V

in der

B" = B' und insbesondere $-OCH_3$, $-OC_2H_5$, $-O-CH_2CH_2-OCH_3$,

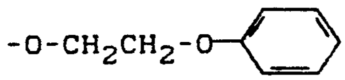, $-CN$, $-COOCH_3$, $-COOC_2H_5$,

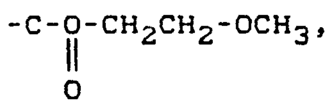, 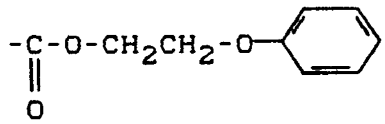, $-CH_3$,

$-C_2H_5$, $-t-C_4H_9$, $CF_3$;

$R_{12}$,$R_{13}$,$R_{14}$,$R_{15}$ = H, $-CH_3$, $-C_2H_5$, Cl, Br, $-OCH_3$, $-OC_2H_5$,

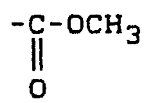, 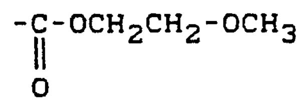,

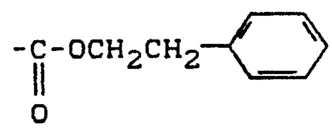, 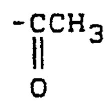, $-CN$;

Y" = Naphthyl und insbesondere Phenyl, die durch $-CH_3$, $-C_2H_5$, $-t-C_4H_9$, Cl, Br, Cyclohexyl, Cyclopentyl, $-OCH_3$, $-OC_2H_5$, Phenyl, Phenoxy,

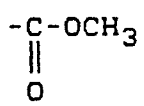, 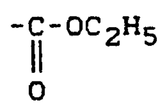,

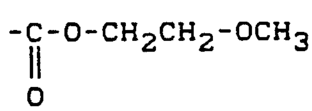, 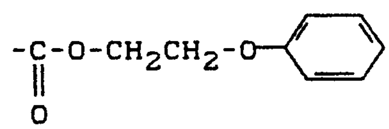, 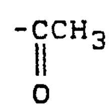

substituiert sein können.

6. Farbstoff der Formel

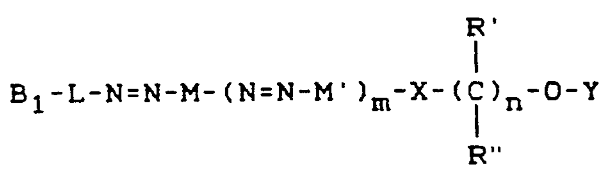 XII

in der

$B_1 = -\underset{\underset{O}{\|}}{C}-OR.$

L,M' = gegebenenfalls substituiertes 1,4-Phenylen, gegegebenenfalls substituiertes 1,4-Naphthylen;

m = 0, 1; für den Fall, daß M = gegebenenfalls substituiertes Biphenylylen bezeichnet m nur 1;

X = O, NH;

n = 2, 3, 4;

Y = gegebenenfalls substituiertes Phenyl, gegebenenfalls substituiertes Naphthyl;

R = gegebenenfalls substituiertes Alkyl, gegebenenfalls substituiertes Cycloalkyl, gegebenenfalls substituiertes Aryl, gegebenenfalls substituiertes Aralkyl;

M = gegebenenfalls substituiertes 4,4'-Biphenylylen, gegebenenfalls substituiertes 1,4-Phenylen, gegebenenfalls substituiertes 1,4-Naphthylen,

R', R" = H, $C_1$-$C_4$-Alkyl, wobei die Reste $-\overset{\overset{R'}{|}}{\underset{\underset{R''}{|}}{C}}-$ gleich oder verschieden sein können, vorzugsweise jedoch $-CH_2$-Reste sind.

7. Farbstoff der Formel

$$RO-(CH_2)_{n'}-X'-L-N=N-M-(N-N-M')_m-NH-(\underset{\underset{R''}{|}}{\overset{\overset{R'}{|}}{C}})_n-O-Y \qquad XIII$$

in der

$n' = 2, 3, 4;$

$X' = O, NH;$

und R, R', R", L, M, M', m, n und Y die in Anspruch 6 angegebene Bedeutung haben.

8. Farbstoff der Formel

$$RO-(CH_2)_{n'}-X'-\underset{\underset{O}{\|}}{C}-L-N=N-M-(N=N-M')_m-NH-(\underset{\underset{R''}{|}}{\overset{\overset{R'}{|}}{C}})_n-O-Y \qquad XIV$$

in der

R, R', R", n', X', L, M, M', m, n und Y die in Anspruch 7 angegebenen Bedeutungen haben.

9. Farbstoff der Formel

$$RO-(CH_2)_{n'}-X'-\underset{\underset{O}{\|}}{C}-O-L-N=N-M-(N=N-M')_m-NH-(\underset{\underset{R''}{|}}{\overset{\overset{R'}{|}}{C}})_n-O-Y \qquad XV$$

in der R, R', R", n', X', L, M, M', m, n und Y die in Anspruch 7 angegebenen Bedeutungen haben.

10. Flüssigkristallines Material gemäß den Ansprüchen 1 bis 9, enthaltend etwa 0,01 bis etwa 30 Gew.-%, insbesondere etwa 0,5 bis etwa 5 Gew.-% Farbstoff oder Farbstoffgemisch.